# EUROPEAN PATENT SPECIFICATION

(11) **EP 3 745 263 B1**
(45) Date of publication and mention of the grant of the patent: **30.04.2025**
(21) Application number: 19764448.7
(22) Date of filing: 05.03.2019
(51) Int. Cl.: G06F 9/50, G06F 12/02

(54) **ELECTRONIC DEVICE AND METHOD FOR CONTROLLING SAME**
ELEKTRONISCHE VORRICHTUNG UND VERFAHREN ZUR STEUERUNG DAVON
DISPOSITIF ÉLECTRONIQUE ET PROCÉDÉ DE COMMANDE DE CELUI-CI

(30) Priority: 09.03.2018 KR 20180028252; 07.06.2018 KR 20180065621
(43) Date of publication of application: 02.12.2020
(73) Proprietor: Samsung Electronics Co., Ltd., Gyeonggi-do 16677 (KR)
(72) Inventor: HWANG, Pyoungju, Suwon-si, Gyeonggi-do 16677 (KR); WOO, Chungki, Suwon-si, Gyeonggi-do 16677 (KR); JEONG, Seokjae, Suwon-si, Gyeonggi-do 16677 (KR); JEONG, Jaehoon, Suwon-si, Gyeonggi-do 16677 (KR); JUNG, Jihun, Suwon-si, Gyeonggi-do 16677 (KR)
(74) Representative: Gulde & Partner
(86) International application number: PCT/KR2019/002546
(87) International publication number: WO 2019/172622

(56) References cited:
- WO-A1-2011/131046
- JP-A- 2011 165 093
- JP-B2- 5 088 366
- KR-A- 20170 055 180
- KR-B1- 100 900 439
- KR-B1- 101 675 199
- US-A1- 2008 168 235

## Description

### [Technical Field]

The present disclosure relates to an electronic apparatus that operates by executing software such as an operating system and applications by hardware such as a CPU and a processor, and a control method thereof, and more particularly, to an electronic apparatus having a structure for securing an available capacity of memory required to execute software during operation and a control method thereof.

### [Background Art]

In order to calculate and process predetermined information according to a specific process, an electronic apparatus basically including electronic components such as a CPU, a chipset, and a memory for operation may be classified into various types according to what information is to be processed. For example, the electronic apparatus includes an information processing apparatus such as a PC or a server that processes general-purpose information, and an image processing apparatus that processes image information. Various electronic apparatuses, such as the image processing apparatus, the display apparatus, and the information processing apparatus, perform preassigned functions as a single entity.

A basic structure in which the electronic apparatus operates should consider two aspects of hardware and software together. In terms of hardware, the electronic apparatus includes a CPU, a processor or SOC, which is an entity for operation and processing of processes, and a memory into which data for the process is loaded. In terms of software, the electronic apparatus includes an operating system or a kernel that performs basic management of a system, and an application that drives on the operating system and executes processes. For example, the CPU loads data corresponding to the operating system into memory and executes the data, and loads applications into the memory while the operating system is executed, and executes the applications on the operating system, so the processes are performed by execution of the applications.

When execution and termination of multiple processes are repeated over time, the share of data of process being loaded into memory, that is, a used capacity of the memory increases and available capacity of the memory decreases. When the available capacity of the memory decreases to a predetermined limit or lower, the operating system of the electronic apparatus performs an operation of reducing the used capacity of the memory and increasing the available capacity of the memory for execution of a subsequent process. Typically, this operation is referred to as memory recovery. The WO 2011/131046 A1 discloses a memory recovery method that in which files are removed according to the usage of the files. The US 2008/0168235 A1 discloses a method in which memory reduction operations are performed based on a memory usage level.

The memory recovery is implemented by program code in the operating system, and is performed when a predetermined condition is satisfied. The operating system may have various memory recovery methods, for example, a conventional Linux-based operating system has a memory recovery method of kernel swap daemon (KSD) and low memory killer (LMK). However, such a memory recovery operation inevitably causes a load of the CPU, but the CPU is not used only for the memory recovery operation due to multitasking characteristics of the electronic apparatus. That is, the CPU may be used by another process even while the memory recovery operation is being performed, and in this case, an overload of the CPU may occur. The overload of the CPU causes a delay in the operation of the electronic apparatus.

Accordingly, there is a need for an electronic apparatus capable of adaptively performing the memory recovery to a system state while minimizing the overload of the CPU.

### [Disclosure]

### [Technical Solution]

According to the invention, an electronic apparatus as defined in claim 1 is disclosed.

The current operating load of the electronic apparatus includes a current operating load of the processor.

The processor executes the first memory recovery operation having a memory recovery rate faster than that of the second memory recovery operation when the checked level is greater than a first threshold, and executes the second memory recovery operation when the checked level is not greater than the first threshold.

The first memory recovery operation may be based on a low memory killer (LMK) type, and the second memory recovery operation may be based on a kernel swap daemon (KSD) type.

Any one of the first memory recovery operation and the second memory recovery operation may be executed when the available capacity is detected to be lower than a second threshold.

The processor may execute the first memory recovery operation and the second memory recovery operation together when the available capacity is lower than a third threshold after any one of the first memory recovery operation and the second memory recovery operation is executed, the third threshold being lower than the second threshold.

The second memory recovery operation may classify data of the process loaded into the memory according to a preset importance, and perform the memory recovery for some data classified according to the classified result.

The first memory recovery operation may perform the memory recovery for the entire data of the process loaded into the memory.

According to another aspect of the invention, a control method of an electronic apparatus is disclosed according to claim 8.

The current operating load of the electronic apparatus includes a current operating load of the processor.

The executing of any one of the first memory recovery operation and the second memory recovery operation includes executing the first memory recovery operation having a memory recovery rate faster than that of the second memory recovery operation when the checked level is greater than a first threshold, and executing the second memory recovery operation when the checked level is not greater than the first threshold.

The first memory recovery operation may be based on an LMK type, and the second memory recovery operation may be based on a KSD type.

Any one of the first memory recovery operation and the second memory recovery operation may be executed when the available capacity is detected to be lower than a second threshold.

The control method further includes: executing the first memory recovery operation and the second memory recovery operation together when the available capacity is lower than a third threshold after any one of the first memory recovery operation and the second memory recovery operation is executed, the third threshold being lower than the second threshold.

The second memory recovery operation may classify data of the process loaded into the memory according to a preset importance, and perform the memory recovery for some data classified according to the classified result.

The first memory recovery operation may perform the memory recovery for the entire data of the process loaded into the memory.

### [Advantageous Effects]

### [Description of Drawings]

FIG. 1 is a configuration block diagram of a display apparatus according to an embodiment of the present disclosure.
FIG. 2 is an exemplary diagram illustrating a principle that a processor of the display apparatus according to the embodiment of the present disclosure loads data into a RAM.
FIG. 3 is a flowchart illustrating a control method of a display apparatus according to an embodiment of the present disclosure.
FIG. 4 is an exemplary diagram illustrating a principle that the display apparatus according to the embodiment of the present disclosure executes KSD.
FIG. 5 is an exemplary diagram illustrating a principle that the display apparatus according to the embodiment of the present disclosure executes LMK.
FIG. 6 is a flowchart of a method of selectively executing, by a display apparatus, KSD and LMK according to an embodiment of the present disclosure.
FIG. 7 is a graph illustrating a change trend in available capacity of a RAM over time in the display apparatus according to the embodiment of the present disclosure.
FIG. 8 is an exemplary diagram illustrating a principle of selecting a memory recovery operation corresponding to a usage rate of the processor of the display apparatus according to the embodiment of the present disclosure.

### [Mode for Disclosure]

Hereinafter, embodiments of the present disclosure will be described in detail with reference to the accompanying drawings. Embodiments described with reference to each drawing are not mutually exclusive configurations unless otherwise specified, and a plurality of embodiments may be selectively combined and implemented in one apparatus.

If there are terms including an ordinal number such as a first component, a second component, and the like in embodiments, these terms are used to describe various components, and the terms are used to distinguish one component from other components, and therefore meaning of these components are not limited by these terms.

In addition, in the case where the expression "at least one" among a plurality of components is described in the present specification, this expression refers to not only the whole of a plurality of components, but each one excluding the rest of the plurality of components or all combinations of thereof.

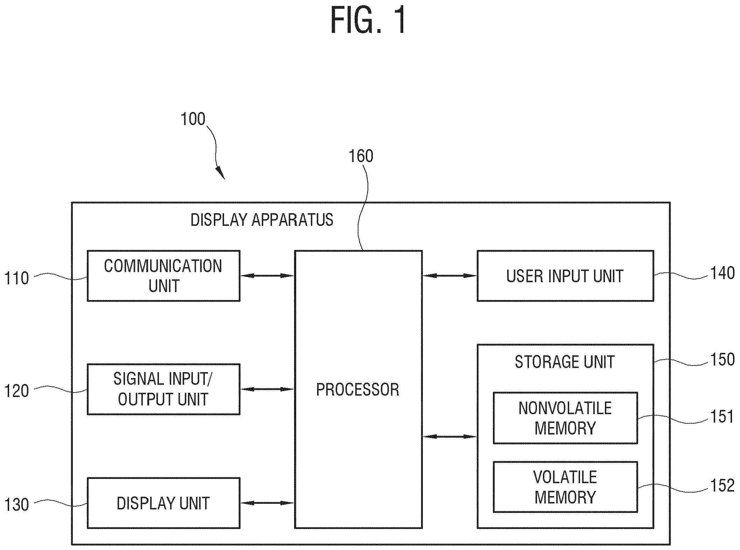

FIG. 1 is a configuration block diagram of a display apparatus according to an embodiment of the present disclosure.

As illustrated in FIG. 1, the apparatus according to the present embodiment is implemented as a display apparatus 100. However, the apparatus to which the present disclosure is applied may be implemented as not only a display apparatus 100 but also various types of electronic apparatuses that are provided to execute a predetermined process when various applications are installed and the corresponding application is executed. Such an electronic apparatus may be implemented as various types of apparatuses such as a TV, a desktop or a laptop computer, a tablet computer, a mobile phone, a portable multimedia player, a wearable apparatus, a video wall, an electronic frame, and household appliances.

The display apparatus 100 includes a communication unit 110 that communicates with an external apparatus, a signal input/output unit 120 that is provided to input/output predetermined data, a display unit 130 that displays an image, a user input unit 140 that performs user input, a storage unit 150 in which data is stored, and a processor 160 that processes data.

The communication unit 110 is a component for communication connection to a network and is a bidirectional communication circuit that includes at least one of components such as communication modules and communication chips corresponding to various types of wired and wireless communication protocols. For example, the communication unit 110 includes a wireless communication module for performing wireless communication with an AP according to a Wi-Fi method, a LAN card wired to a router or a gateway, and the like.

The signal input/output unit 120 is a component for local connection, and is wired to a predetermined external apparatus in a one-to-one or one-to-many manner to receive data or output data to and from the external apparatus. The signal input/output unit 120 includes at least one port provided to connect to a connector according to predetermined transmission standards, such as an HDMI port and a USB port.

The display unit 130 includes a display panel that may display an image on a screen. The display panel is provided as a light-receiving structure such as a liquid crystal type or a self-luminous structure such as an OLED type. The display unit 130 may further include additional components according to the structure of the display panel. For example, if the display panel is a liquid crystal type, the display unit 130 includes a backlight unit that supplies light to a liquid crystal display panel and a panel driving substrate that drives a liquid crystal of the liquid crystal display panel.

The user input unit 140 includes various types of input interfaces provided to perform user input. The user input unit 140 may be configured in various forms according to the type of the display apparatus 100, and is, for example, a mechanical or electronic button unit of the display apparatus 100, a remote controller separated from the display apparatus 100, a touch pad, a touch screen installed on the display unit 130, and the like.

The storage unit 150 is accessed by the processor 160, and operations such as reading, writing, modifying, deleting, and updating data are performed according to the control of the processor 160. The storage unit 150 includes a nonvolatile memory 151 capable of storing data regardless of whether or not power is provided, and a volatile memory 152 in which data may be stored while power is being supplied and data is lost when power is not supplied. Examples of the nonvolatile memory 151 include a flash-memory, a hard disk drive, a solid-state drive (SSD), and the like, and examples of the volatile memory 152 include a buffer, a RAM, and the like.

The processor 160 includes at least one hardware processor implemented as a CPU, a chipset, a buffer, a circuit, and the like that are mounted on a printed circuit board, and may be implemented as a system on chip (SOC) depending on the design method. The processor 160 includes modules corresponding to various processes such as a demultiplexer, a decoder, a scaler, an audio DSP, and an amplifier, in which some or all of them may be implemented as an SOC. For example, a module related to image processing such as a demultiplexer, a decoder, and a scaler may be implemented as an image processing SOC, and an audio DSP may be implemented as a separate chipset from the SOC.

The processor 160 is a hardware subject of an operation for performing general operations of the display apparatus 100. In terms of software, a predetermined operation of the display apparatus 100 is performed by the operating system or the kernel or is performed by an application executed on the kernel, and the processor 160 performs operation, processing, and control of data so that the software is executed. For example, the processor 160 executes the operating system or the kernel of the display apparatus 100, and also executes an application or a program on the kernel to perform the process.

The processor 160 first loads data related to the process into a RAM, which is the volatile memory 152, and executes the process based on the data loaded into the RAM. Hereinafter, the principle in which the processor 160 loads the data into the RAM will be described.

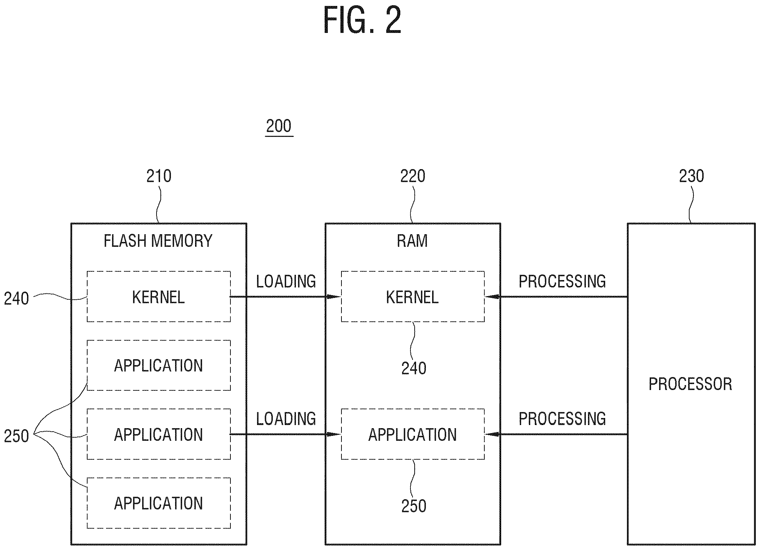

FIG. 2 is an exemplary diagram illustrating a principle that the processor of the display apparatus according to the embodiment of the present disclosure loads the data into the RAM.

As illustrated in FIG. 2, a display apparatus 200 includes a flash memory 210 which is a nonvolatile memory for storing data of a kernel 240 and a plurality of applications 250, a RAM 220 which is a volatile memory, and a processor 230. The operation of the kernel 240 which is software and the application 250 is performed by the operation, processing, and control of the processor 230 which is hardware.

When a power supply of the display apparatus 200 is turned on, booting is performed, and the kernel 240 is loaded from the flash memory 210 into the RAM 220 during the booting and executed on the RAM 220. The kernel 240 responds to various events that are generated while the operation of the display apparatus 200 is in progress, and as a result, each application 250 is loaded into the RAM 220. The application 250 loaded into the RAM 220 occupies an available capacity of the RAM 220 and is executed on the kernel 240.

The available capacity of the RAM 220 refers to a capacity of a storage area of the RAM 220 where no data is loaded or allocated for the currently executing process. Meanwhile, the used capacity of the RAM 220 refers to the capacity of the storage area of the RAM 220 where data is loaded or allocated for the currently executing process.

The kernel 240 may load the application 250 of the flash memory 210 into the RAM 220 according to the execution or termination event of various processes and executes the application 250, or may release allocation of data of the application 250 in the storage area of the RAM 220.

However, if the execution of the process is repeated as an operation time of the display apparatus 200 elapses, the used capacity of the RAM 220 may increase, and the available capacity of the RAM 200 may thus be insufficient. When the available capacity of the RAM 220 is insufficient, it is difficult to load the data for the new process into the RAM 220.

Accordingly, when it is determined that the available capacity of the RAM 220 is insufficient, the kernel 240 performs the memory recovery operation. The kernel 240 may determine whether the available capacity of the RAM 220 is insufficient in various ways. For example, if it is determined that the available capacity of the RAM 220 is lower than a preset first threshold, the used capacity of the RAM 220 is greater than a preset second threshold, or the number of currently executing processes is greater than a preset third threshold, the kernel 240 may be determined that the memory recovery operation is required.

Hereinafter, the memory recovery operation of the kernel 240 or the processor 230 according to the embodiment of the present disclosure will be described.

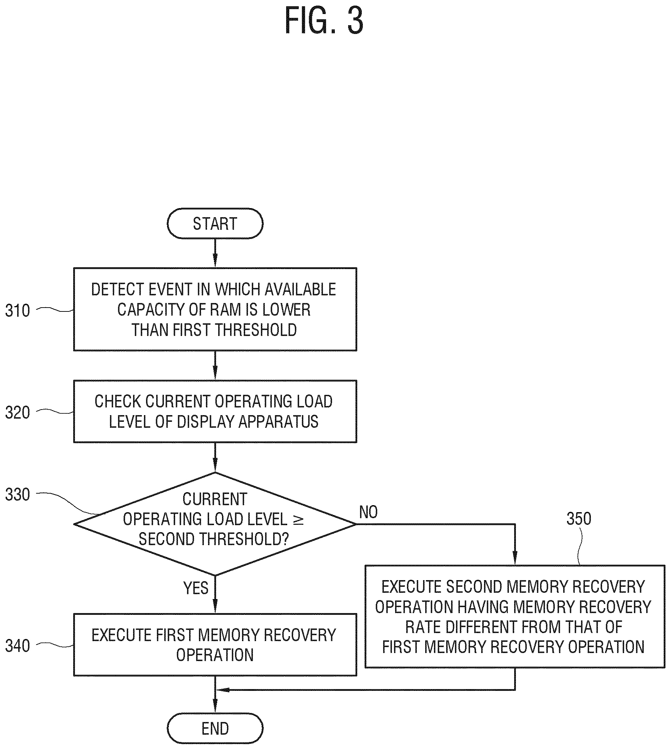

FIG. 3 is a flowchart illustrating a control method of a display apparatus according to an embodiment of the present disclosure.

As illustrated in FIG. 3, the following operation is performed by a processor that drives the kernel installed in the display apparatus.

In step 310, the display apparatus detects that an event is occurred in which the available capacity of the RAM is lower than a predetermined first threshold. If no event has been occurred in which the available capacity of the RAM is lower than the first threshold, the display apparatus maintains the currently executing process.

On the other hand, if it is detected that an event has been occurred in which the available capacity of the RAM is lower than the first threshold, in step 320, the display apparatus checks a current operating load level of the display apparatus.

In step 330, the display apparatus compares the checked current operating load level with a predetermined second threshold.

If the current operating load level is greater than the second threshold, in step 340, the display apparatus executes a first memory recovery operation among the plurality of memory recovery operations.

On the other hand, if the current operating load level is not greater than the second threshold, in step 350, the display apparatus executes a second memory recovery operation having a memory recovery rate different from that of the first memory recovery operation among the plurality of memory recovery operations.

The above operations are implemented by a program code included in the kernel.

As a result, the display apparatus may minimize the overload of the system due to the memory recovery operation by selecting the optimized memory recovery operation in response to the current operating load of the display apparatus.

Here, there can be various methods of checking the current operating load level of the display apparatus. For example, the display apparatus may determine the current operating load level of the display apparatus according to the current usage rate of the processor indicated by a percentage, or the number of currently executing processes. That is, the display apparatus determines that the operating load level is high when the current usage rate of the processor is high, and determines that the operating load level is low when the current usage rate of the processor is low.

In addition, in the present embodiment, it has been described that the display apparatus executes the first memory recovery operation when the current operating load level is relatively high, and executes the second memory recovery operation when the current operating load level is relatively low. However, there may be three or more memory recovery operations of different methods, and the display apparatus can be configured to divide a possible range of the current operating load level into a plurality and perform individual memory recovery operations corresponding to each divided range.

Meanwhile, the plurality of memory recovery operations may be applied to the display apparatus in various ways depending on the type or characteristics of the kernel. For example, the Linux-based kernel has a memory recovery method of kernel swap daemon (KSD) and low memory killer (LMK). In the present embodiment, the first memory recovery operation has specifically a faster memory recovery rate, a lower processor load, and lower memory recovery efficiency than the second memory recovery operation.

That is, when the memory recovery operation is to be performed, the display apparatus according to the embodiment of the present disclosure executes the first memory recovery operation having a relatively faster memory recovery rate when the current operating load of the apparatus is high, and executes a second memory recover operation having a relatively slower memory recovery rate when the current operating load of the apparatus is low. Thereby, it is possible to minimize delays of various processes executed on the display apparatus while the memory recovery operation is being executed.

Considering this, the first memory recovery operation corresponds to the LMK in the Linux-based kernel, and the second memory recovery operation corresponds to the KSD. Hereinafter, the LMK and KSD will be described in detail.

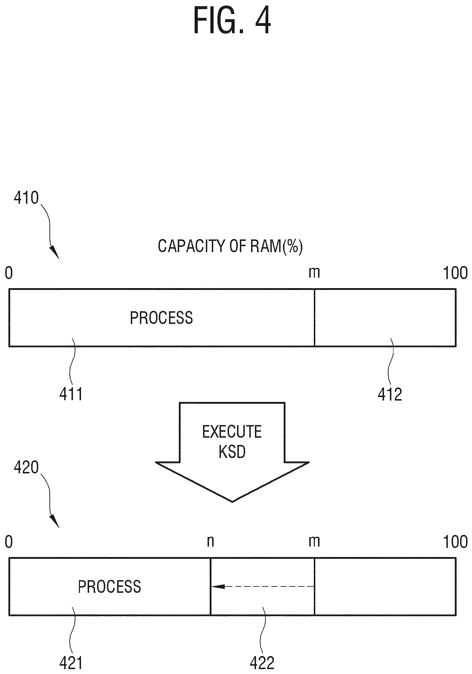

FIG. 4 is an exemplary diagram illustrating a principle that the display apparatus according to the embodiment of the present disclosure executes the KSD.

As illustrated in FIG. 4, a bar graph indicating step 410 before the memory recovery indicates the used capacity currently occupied by various processes of the display apparatus in the total capacity of the RAM. Assuming that the total capacity of the entire storage area of the RAM is 100%, a used capacity 411 of the RAM occupied by the process in step 410 is m%, and the remaining available capacity 412 of the RAM is (100 - m)%.

The KSD is a method of recovering memory by classifying main data and additional data among the data of the process loaded into the RAM, and maintaining the main data in the RAM and excluding the additional data from the RAM according to the classified result. Here, the main data is core data necessary for the execution of the process, and includes a program code of an application, and the like. The additional data is data having less importance in the process than the main data, that is, data that may or may not be selectively used in the execution of the process, and includes cache data, metadata, and the like.

The display apparatus executes the KSD to perform the memory recovery. According to the bar graph of step 420 after the memory recovery, among the data of the process occupying m% in the previous step 410, main data 421 of the process occupying n% is maintained, and additional data 422 of the process occupying (m - n)% is recovered.

As described above, since the main data 421 of the process is not recovered and maintained in RAM, the memory recovery operation according to the KSD may use the main data 421 maintained in the RAM as it is when the corresponding process is re-executed later. Therefore, the KSD has relatively fast responsiveness when the corresponding process is re-executed, and relatively high memory recovery efficiency.

On the other hand, since the KSD needs to distinguish the main data 421 and the additional data 422 among the data of the process loaded into the RAM, the processor load is relatively high and the memory recovery rate is relatively slow.

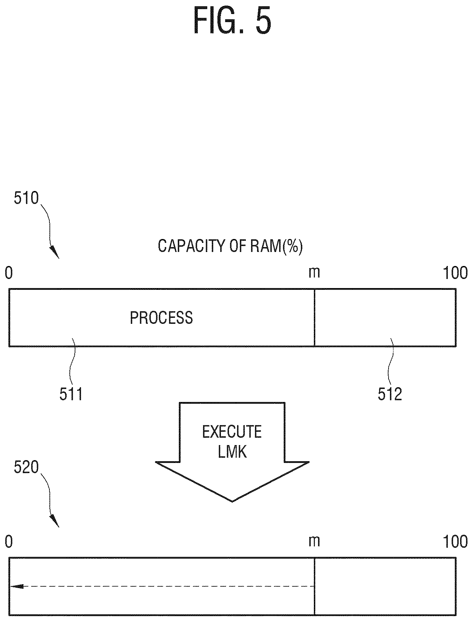

FIG. 5 is an exemplary diagram illustrating a principle that the display apparatus according to the embodiment of the present disclosure executes LMK.

As illustrated in FIG. 5, a bar graph indicating step 510 before the memory recovery indicates the used capacity currently occupied by various processes of the display apparatus in the total capacity of the RAM. Assuming that the total capacity of the entire storage area of the RAM is 100%, a used capacity 511 of the RAM occupied by the process in step 510 is m%, and an available capacity 512 of the RAM is (100 - m)%.

Unlike the KSD, the LMK does not distinguish the main data and the additional data among the data of the process loaded into the RAM. The LMK is a method of recovering memory by excluding, from the RAM, all the data of the process having less importance among the processes loaded into the RAM. More specifically, a plurality of groups divided by importance defined in advance are set, and the LMK is a method of identifying a process belonging to a group of low importance among a plurality of groups and recovering data of the identified process.

The display apparatus executes the LMK to perform the memory recovery. According to the bar graph of step 520 after the memory recovery, it can be seen that all the data 511 of the process occupying m% in the previous step 510 is recovered. FIG. 5 illustrates that the capacity of the RAM is 0%, which is simplified for a clear comparison with the KSD described above. That is, in FIG. 5, in step 520 to which the LMK is applied, only the case of the process having low importance is illustrated.

As described above, the memory recovery operation according to the LMK requires a process in which the data of the corresponding process is loaded into the RAM again when the corresponding process is re-executed later since all the data of the process is recovered from the RAM. Therefore, the LMK has relatively slow responsiveness when the corresponding process is re-executed and relatively low memory recovery efficiency.

On the other hand, the LMK does not distinguish the main data and the additional data among the data of the process loaded into the RAM, and recovers all the data of the selected process according to the importance, so the load of the processor is relatively low and the memory recovery rate is relatively fast.

The difference between the KSD and the LMK is as follows. The KSD has the high load of the processor, the slow memory recovery rate, the high memory recovery efficiency, and the relatively fast responsiveness when the process is re-executed after the memory recovery. On the other hand, the LMK has the low load of the processor, the fast memory recovery rate, the low memory recovery efficiency, and the relatively slow responsiveness when the process is re-executed after the memory recovery.

Therefore, when the load of the processor is high during the memory recovery operation, the KSD may cause an overload of the processor, so the LMK capable of quickly recovering the memory is more advantageous than the KSD. On the other hand, if the processor can stand the load even if the KSD is executed during the memory recovery operation, the KSD may be more advantageous than the LMK having the low memory recovery efficiency.

When two memory recovery methods of the KSD and the LMK are applied to the display apparatus according to the embodiment of the present disclosure, the display apparatus operates as follows.

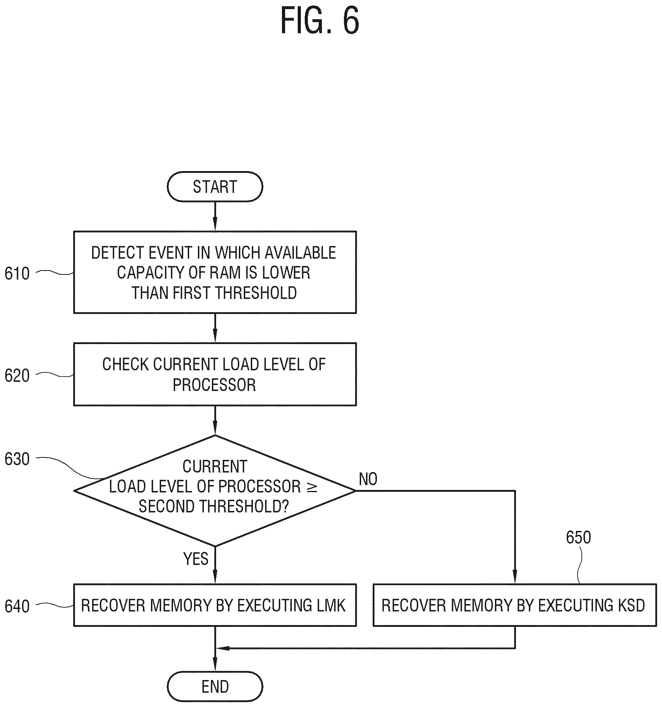

FIG. 6 is a flowchart of a method of selectively executing, by a display apparatus, KSD and LMK according to an embodiment of the present disclosure.

As illustrated in FIG. 6, the following operation is performed by the kernel installed in the display apparatus or the processor that drives the corresponding kernel.

In step 610, the display apparatus detects that an event is occurred in which the available capacity of the RAM is lower than the first threshold.

In step 620, the display apparatus checks the current load level of the processor.

In step 630, the display apparatus checks whether the checked current load level of the processor is greater than the second threshold.

If the current load level of the processor is greater than the second threshold, in step 640, the display apparatus executes the LMK to perform the memory recovery.

On the other hand, if the current load level of the processor is not greater than the second threshold, in step 650, the display apparatus executes the KSD to perform the memory recovery.

The present embodiment describes the case in which two types of the LMK and the KSD are applied, but the idea of the present disclosure can be performed according to the same principle as in the present embodiment even when three or more types among various memory recovery operations are applied.

However, in some cases, the available capacity of the RAM is not sufficiently secured even by the memory recovery method described above, and the available capacity of the RAM may be lower than in the event described above. In this case, the display apparatus secures the available capacity of the RAM as quickly as possible by executing the KSD and the LMK together. Hereinafter, these embodiments will be described.

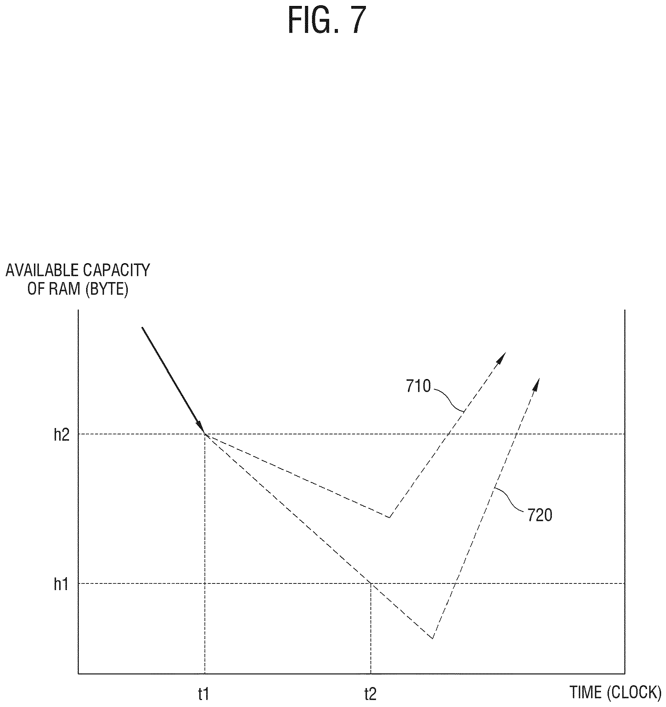

FIG. 7 is a graph illustrating a change trend in available capacity of a RAM over time in the display apparatus according to the embodiment of the present disclosure.

As illustrated in FIG. 7, the available capacity of the RAM changes over time. In this graph, a horizontal axis represents time and a vertical axis represents the available capacity of the RAM. In the case of a unit, a time unit may be a clock and the available capacity unit of the RAM may be a byte, but each unit is applied for convenience and various other units may be applied.

Two thresholds such as a first threshold h1 and a second threshold h2 greater than the first threshold are set in advance in the display apparatus. The first threshold h1 and the second threshold h2 may be determined through various experiments in the manufacturing process. These two thresholds are used as triggers for the memory recovery operation.

If it is determined that the available capacity of the RAM decreases to the second threshold h2 or lower at a first time t1, the display apparatus selectively executes either the KSD or the LMK in response to the current operating load of the display apparatus (710). This operation is based on the same principle as in the previous embodiment, and therefore detailed description thereof is omitted. If the available capacity of the RAM again increases to be greater than the second threshold h2 by the execution of either the KSD or the LMK, the display apparatus ends the memory recovery operation.

However, depending on the state of the display apparatus, the available capacity of the RAM may decrease to be the first threshold h1 or lower at a second time t2 despite the execution of either the KSD or the LMK (720). If determined from such a situation, the display apparatus performs the memory recovery operation by executing the KSD and the LMK together. Thereafter, when the available capacity of the RAM becomes a value between the first threshold h1 and the second threshold h2, the display apparatus selectively executes either the KSD or the LMK in response to the current operating load of the display apparatus, and when the available capacity of RAM again increases to be greater than the second threshold h2, the display apparatus ends the memory recovery operation.

The method of executing KSD and LMK together makes it possible to secure the available capacity of the RAM more quickly and more, instead of increasing the operating load of the display apparatus. For example, while distinguishing the main data and the additional data according to the KSD for the process having relatively high importance, the display apparatus first performs the memory recovery quickly according to the LMK for the process having relatively low importance, and then performs the memory recovery for the distinguished additional data.

According to this method, the display apparatus may cope with a situation in which the available capacity of the RAM decreases despite the memory recovery operation.

On the other hand, the previous embodiment has described the case of selectively using two memory recovery operations in response to the load of the processor Hereinafter, these embodiments will be described.

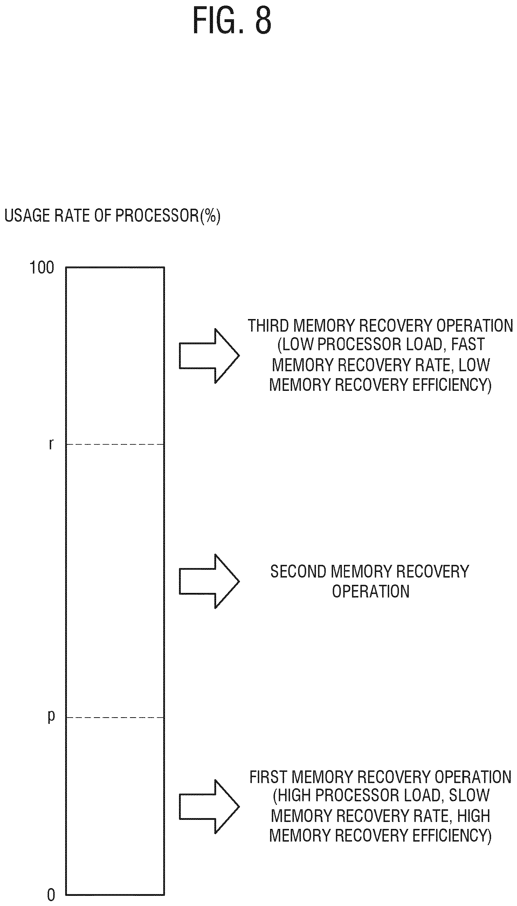

FIG. 8 is an exemplary diagram illustrating a principle of selecting a memory recovery operation corresponding to a usage rate of the processor of the display apparatus according to the embodiment of the present disclosure.

As illustrated in FIG. 8, the usage rate of the processor may be represented in a range between 0% and 100%. In the usage rate of the processor, preset p% and r% greater than p% are set in advance in the display apparatus. The values of these p and r are positive numbers and may be determined through experiments in the manufacturing process of the display apparatus. By this setting, the usage rate of the processor may be divided into a first range between 0% and p%, a second range between p% and r%, and a third range between r% and 100%.

On the other hand, the plurality of memory recovery operations include the following three different types: a first memory recovery operation, a second memory recovery operation having a memory recovery rate faster than that of the first memory recovery operation, and a third memory recovery operation having a memory recovery rate faster than that of the second memory recovery operation. That is, among the three memory recovery operations, the first memory recovery operation has the highest load and memory recovery efficiency of the processor. In the second memory recovery operation, three degrees of the load of the processor, the memory recovery rate, and the memory recovery efficiency represent values between the first memory recovery operation and the third memory recovery operation.

The display apparatus executes the first memory recovery operation when the current load level of the processor is in the first range, and executes the second memory recovery operation when the current load level of the processor is in the second range, and executes the third memory recovery operation when the current load level of the processor is in the third range.

That is, the display apparatus executes the first memory recovery operation having the slowest memory recovery rate among the plurality of memory recovery operations when the current load level of the processor is relatively low, executes the second memory recovery operation having a medium memory recovery rate when the current load level of the processor is medium, and executes the third memory recovery operation having the fastest memory recovery rate when the current load level of the processor is relatively high.

Accordingly, the display apparatus may selectively execute three or more memory recovery operations in response to the current load of the processor.

The operations of the apparatus as described in the above embodiments may be performed by artificial intelligence mounted in the apparatus. The artificial intelligence can be applied to various systems using machine learning algorithms. The artificial intelligence system is a computer system that implements intelligence corresponding to a human level or comparable to a human level, and is a system in which a machine, an apparatus, or a system autonomously performs learning and determination, and the recognition rate and determination accuracy are improved based on accumulation of use experience. The artificial intelligence technology includes machine learning (deep learning) technologies that use algorithms to classify/learn characteristics of input data, element technologies that simulate functions of recognition, determination, and the like of a human brain using machine learning algorithms, and the like.

Examples of the element technologies include at least one of linguistic understanding technology for recognizing human language/character, visual understanding technology for recognizing objects like human vision, reasoning/prediction technology for logically reasoning and predicting information by determining the information, knowledge expression technology processing human experience information with knowledge data, or motion control technology controlling autonomous driving of vehicles and movement of robots.

The linguistic understanding is a technology of recognizing and applying/processing human languages/characters, and includes natural language processing, machine translation, a dialog system, question and answer, speech recognition/synthesis, and the like.

The inference/prediction is a technology of deciding and logically inferring and predicting information, and includes knowledge/probability-based inference, optimization prediction, preference-based planning, recommendation, and the like.

The knowledge representation is a technology of automating and processing human experience information as knowledge data, and includes knowledge establishment (data generation/ classification), knowledge management (data utilization), and the like.

Methods according to embodiments of the present disclosure may be implemented in a form of program commands that may be executed through various computer means and may be recorded in a computer-readable recording medium. The computer-readable recording medium may include a program command, a data file, a data structure, or the like, alone or a combination thereof. For example, the computer-readable recording medium may be stored in a volatile or nonvolatile storage such as a read only memory (ROM), a memory such as a random access memory (RAM), a memory chip, a apparatus, or an integrated circuit, or a storage medium optically or magnetically readable and readable by a machine (for example, a computer), such as a compact disk (CD), a digital versatile disk (DVD), a magnetic disk, a magnetic tape, or the like, regardless of whether data are erasable or rewritable. It may be appropriated that a memory that may be included in a mobile terminal is an example of a storage medium appropriate for storing a program or programs including instructions implementing embodiments of the present disclosure and readable by a machine. The program instructions recorded in this storage medium may be specially designed and constructed for the present disclosure or may be known and usable by those skilled in the art of computer software.

## Claims

1. An electronic apparatus, comprising:
a memory (220); and
a processor (230) configured to:
execute a process using data loaded into the memory (220),
**characterized in that**,
identify (320) a current usage rate of the processor (230),
execute (330) a first memory recovery operation having a memory recovery rate faster than that of a second memory recovery operation when the identified current usage rate is greater than a usage rate threshold, and
execute (350) the second memory recovery operation when the identified current usage rate is not greater than the usage rate threshold.

2. The electronic apparatus of claim 1, wherein the current usage rate includes a current operating load of the processor (230).

3. The electronic apparatus of claim 1, wherein the first memory recovery operation is a low memory killer, LMK,, which performs the memory recovery for the entire of data (510) of the process loaded into the memory (220), and
the second memory recovery operation is a kernel swap daemon, KSD, which performs the memory recovery for a portion of the data (422) loaded into the memory (220).

4. The electronic apparatus of claim 1, wherein any one of the first memory recovery operation and the second memory recovery operation is executed when the available capacity is detected to be lower than a first capacity threshold (h2).

5. The electronic apparatus of claim 4, wherein the processor (230) is configured to execute the first memory recovery operation and the second memory recovery operation together when an available capacity is lower than a second capacity threshold (h1) after one of the first memory recovery operation and the second memory recovery operation is executed, the second capacity threshold (h1) being lower than the first capacity threshold (h2).

6. The electronic apparatus of claim 1, wherein the second memory recovery operation comprises classifying data of the process loaded into the memory according to a preset importance, and performing the memory recovery for some data (422) classified according to the classified result.

7. The electronic apparatus of claim 1, wherein the first memory recovery operation comprises performing the memory recovery for the entire data (520) of the process loaded into the memory.

8. A control method of an electronic apparatus, comprising:
executing a process using data loaded into a memory of the electronic apparatus;
**characterized in**,
identifying (320) a current usage rate of a processor (230) of the electronic apparatus;
executing (330) a first memory recovery operation having a memory recovery rate faster than that of a second memory recovery operation when the identified current usage rate is greater than a usage rate threshold, and
executing (350) the second memory recovery operation when the identified current usage rate is not greater than the usage rate threshold.

9. The control method of claim 8, wherein the current usage rate includes a current operating load of the processor.

10. The control method of claim 8, wherein the first memory recovery operation is an LMK, which performs the memory recovery for the entire of data (510) loaded into the memory (220), and
the second memory recovery operation is a KSD, which performs the memory recovery for a portion of the data (422) loaded into the memory (220).

11. The control method of claim 8, wherein any one of the first memory recovery operation and the second memory recovery operation is executed when the available capacity is detected to be lower than a first capacity threshold (h2).

12. The control method of claim 11, further comprising:
executing the first memory recovery operation and the second memory recovery operation together when the available capacity is lower than a second capacity threshold (h1) after one of the first memory recovery operation and the second memory recovery operation is executed, the second capacity threshold (h1) being lower than the first capacity threshold (h2).

13. The control method of claim 8, wherein the second memory recovery operation comprises classifying data of the process loaded into the memory according to a preset importance, and performing the memory recovery for some data (422) classified according to the classified result.

## Patentansprüche

1. Elektronische Vorrichtung, umfassend:
einen Speicher (220); und
einen Prozessor (230), der konfiguriert ist zum:
Ausführen eines Prozesses unter Verwendung der in den Speicher (220) geladenen Daten,
**gekennzeichnet durch**
Identifizieren (320) einer aktuellen Nutzungsrate des Prozessors (230),
Ausführen (330) eines ersten Speicherwiederherstellungsvorgangs mit einer schnelleren Speicherwiederherstellungsrate als die eines zweiten Speicherwiederherstellungsvorgangs, wenn die identifizierte aktuelle Nutzungsrate größer als ein Nutzungsratenschwellenwert ist, und
Ausführen (350) des zweiten Speicherwiederherstellungsvorgangs, wenn die identifizierte aktuelle Nutzungsrate nicht größer ist als der Nutzungsratenschwellenwert.

2. Elektronische Vorrichtung nach Anspruch 1, wobei die aktuelle Nutzungsrate eine aktuelle Betriebslast des Prozessors (230) umfasst.

3. Elektronische Vorrichtung nach Anspruch 1, wobei der erste Speicherwiederherstellungsvorgang eine geringe Speicherlöschung, LMK, ist, die die Speicherwiederherstellung für die Gesamtheit der Daten (510) des in den Speicher (220) geladenen Prozesses durchführt, und
wobei der zweite Speicherwiederherstellungsvorgang ein Kernel-Tausch-Daemon, KSD, ist, der die Speicherwiederherstellung für einen Abschnitt der in den Speicher (220) geladenen Daten (422) durchführt.

4. Elektronische Vorrichtung nach Anspruch 1, wobei eines des ersten Speicherwiederherstellungsvorgangs und des zweiten Speicherwiederherstellungsvorgangs ausgeführt wird, wenn festgestellt wird, dass die verfügbare Kapazität niedriger als ein erster Kapazitätsschwellenwert (h2) ist.

5. Elektronische Vorrichtung nach Anspruch 4, wobei der Prozessor (230) so konfiguriert ist, dass er den ersten Speicherwiederherstellungsvorgang und den zweiten Speicherwiederherstellungsvorgang zusammen ausführt, wenn eine verfügbare Kapazität niedriger ist als ein zweiter Kapazitätsschwellenwert (h1), nachdem einer des ersten Speicherwiederherstellungsvorgangs und des zweiten Speicherwiederherstellungsvorgangs ausgeführt wurde, wobei der zweite Kapazitätsschwellenwert (h1) niedriger ist als der erste Kapazitätsschwellenwert (h2).

6. Elektronische Vorrichtung nach Anspruch 1, wobei der zweite Speicherwiederherstellungsvorgang das Klassifizieren von Daten des in den Speicher geladenen Prozesses gemäß einer voreingestellten Wichtigkeit und die Durchführung der Speicherwiederherstellung für einige gemäß dem klassifizierten Ergebnis klassifizierte Daten (422) umfasst.

7. Elektronische Vorrichtung nach Anspruch 1, wobei der erste Speicherwiederherstellungsvorgang die Durchführung der Speicherwiederherstellung für die gesamten Daten (520) des in den Speicher geladenen Prozesses umfasst.

8. Steuerungsverfahren einer elektronischen Vorrichtung, Folgendes umfassend:
Ausführen eines Prozesses unter Verwendung von Daten, die in einen Speicher der elektronischen Vorrichtung geladen wurden;
**gekennzeichnet durch**
Identifizieren (320) einer aktuellen Nutzungsrate eines Prozessors (230) der elektronischen Vorrichtung;
Ausführen (330) eines ersten Speicherwiederherstellungsvorgangs mit einer schnelleren Speicherwiederherstellungsrate als die eines zweiten Speicherwiederherstellungsvorgangs, wenn die identifizierte aktuelle Nutzungsrate größer als ein Nutzungsratenschwellenwert ist, und
Ausführen (350) des zweiten Speicherwiederherstellungsvorgangs, wenn die identifizierte aktuelle Nutzungsrate nicht größer ist als der Nutzungsratenschwellenwert.

9. Steuerungsverfahren nach Anspruch 8, wobei die aktuelle Nutzungsrate eine aktuelle Betriebslast des Prozessors umfasst.

10. Steuerungsverfahren nach Anspruch 8, wobei der erste Speicherwiederherstellungsvorgang eine LMK ist, die die Speicherwiederherstellung für die Gesamtheit der in den Speicher (220) geladenen Daten (510) durchführt, und
wobei der zweite Speicherwiederherstellungsvorgang ein KSD ist, der die Speicherwiederherstellung für einen Abschnitt der in den Speicher (220) geladenen Daten (422) durchführt.

11. Steuerungsverfahren nach Anspruch 8, wobei eines des ersten Speicherwiederherstellungsvorgangs und des zweiten Speicherwiederherstellungsvorgangs ausgeführt wird, wenn festgestellt wird, dass die verfügbare Kapazität niedriger als ein erster Kapazitätsschwellenwert (h2) ist.

12. Steuerungsverfahren nach Anspruch 11, ferner umfassend:
Ausführen des ersten Speicherwiederherstellungsvorgangs und des zweiten Speicherwiederherstellungsvorgangs zusammen, wenn die verfügbare Kapazität niedriger ist als ein zweiter Kapazitätsschwellenwert (h1), nachdem einer des ersten Speicherwiederherstellungsvorgangs und des zweiten Speicherwiederherstellungsvorgangs ausgeführt wurde, wobei der zweite Kapazitätsschwellenwert (h1) niedriger ist als der erste Kapazitätsschwellenwert (h2).

13. Steuerungsverfahren nach Anspruch 8, wobei der zweite Speicherwiederherstellungsvorgang das Klassifizieren von Daten des in den Speicher geladenen Prozesses gemäß einer voreingestellten Wichtigkeit und die Durchführung der Speicherwiederherstellung für einige gemäß dem klassifizierten Ergebnis klassifizierte Daten (422) umfasst.

## Revendications

1. Dispositif électronique, comprenant :
une mémoire (220) ; et
un processeur (230) configuré pour :
exécuter un processus en utilisant les données chargées dans la mémoire (220),
caractérisé en
identifier (320) un taux d'utilisation actuel du processeur (230), exécuter (330) une première opération de récupération de mémoire ayant un taux de récupération de mémoire plus rapide que celui d'une seconde opération de récupération de mémoire lorsque le taux d'utilisation actuel identifié est supérieur à un seuil de taux d'utilisation, et
exécuter (350) la seconde opération de récupération de mémoire lorsque le taux d'utilisation actuel identifié n'est pas supérieur au seuil de taux d'utilisation.

2. Dispositif électronique de la revendication 1, dans lequel le taux d'utilisation actuel comprend une charge de fonctionnement actuelle du processeur (230).

3. Dispositif électronique de la revendication 1, dans lequel la première opération de récupération de mémoire est une suppression de faible mémoire, LMK, qui effectue la récupération de mémoire pour l'ensemble des données (510) du processus chargées dans la mémoire (220), et
dans lequel la seconde opération de récupération de mémoire est un daemon d'échange du noyau, KSD, qui effectue la récupération de mémoire pour une partie des données (422) chargées dans la mémoire (220).

4. Dispositif électronique de la revendication 1, dans lequel l'une quelconque de la première opération de récupération de mémoire et de la seconde opération de récupération de mémoire est exécutée lorsque la capacité disponible est détectée comme étant inférieure à un premier seuil de capacité (h2).

5. Dispositif électronique de la revendication 4, dans lequel le processeur (230) est configuré pour exécuter la première opération de récupération de mémoire et la seconde opération de récupération de mémoire ensemble lorsqu'une capacité disponible est inférieure à un second seuil de capacité (h1) après l'exécution d'une de la première opération de récupération de mémoire et de la seconde opération de récupération de mémoire, le second seuil de capacité (h1) étant inférieur au premier seuil de capacité (h2).

6. Dispositif électronique de la revendication 1, dans lequel la seconde opération de récupération de mémoire comprend la classification des données du processus chargées dans la mémoire selon une importance prédéfinie, et l'exécution de la récupération de mémoire pour certaines données (422) classées selon le résultat classé.

7. Dispositif électronique de la revendication 1, dans lequel la première opération de récupération de mémoire comprend la réalisation de la récupération de mémoire pour l'ensemble des données (520) du processus chargées dans la mémoire.

8. Procédé de commande d'un dispositif électronique (100), comprenant :
exécuter un processus à l'aide de données chargées dans une mémoire du dispositif électronique ;
caractérisé en
identifier (320) un taux d'utilisation actuel d'un processeur (230) du dispositif électronique ;
exécuter (330) une première opération de récupération de mémoire ayant un taux de récupération de mémoire plus rapide que celui d'une seconde opération de récupération de mémoire lorsque le taux d'utilisation actuel identifié est supérieur à un seuil de taux d'utilisation, et
exécuter (350) la seconde opération de récupération de mémoire lorsque le taux d'utilisation actuel identifié n'est pas supérieur au seuil de taux d'utilisation.

9. Procédé de commande de la revendication 8, dans lequel le taux d'utilisation actuel comprend une charge de fonctionnement actuelle du processeur.

10. Procédé de commande de la revendication 8, dans lequel la première opération de récupération de mémoire est une LMK, qui effectue la récupération de mémoire pour l'ensemble des données (510) chargées dans la mémoire (220), et
dans lequel la seconde opération de récupération de mémoire est un KSD, qui effectue la récupération de mémoire pour une partie des données (422) chargées dans la mémoire (220).

11. Procédé de commande de la revendication 8, dans lequel l'une quelconque de la première opération de récupération de mémoire et de la seconde opération de récupération de mémoire est exécutée lorsque la capacité disponible est détectée comme étant inférieure à un premier seuil de capacité (h2).

12. Procédé de commande de la revendication 11, comprenant en outre :
exécuter la première opération de récupération de mémoire et la seconde opération de récupération de mémoire ensemble lorsque la capacité disponible est inférieure à un second seuil de capacité (h1) après l'exécution d'une de la première opération de récupération de mémoire et de la seconde opération de récupération de mémoire, le second seuil de capacité (h1) étant inférieur au premier seuil de capacité (h2).

13. Procédé de commande de la revendication 8, dans lequel la seconde opération de récupération de mémoire comprend la classification des données du processus chargées dans la mémoire selon une importance prédéfinie, et l'exécution de la récupération de mémoire pour certaines données (422) classées selon le résultat classé.
